# EUROPEAN PATENT SPECIFICATION

(11) **EP 0 290 666 B1**
(45) Date of publication and mention of the grant of the patent: **31.03.1993**
(21) Application number: 87108972.8
(22) Date of filing: 23.06.1987
(51) Int. Cl.: A23L 3/44, A23L 3/34

(54) **Deep freezing solution and deep freezing procedure**
Tiefgefrorene Lösung und Tiefgefrierverfahren
Solution congélée basse et processus de congélation basse

(30) Priority: 05.05.1987 FI 871977
(43) Date of publication of application: 17.11.1988
(73) Proprietor: Pentti Porkka Oy, 15870 Salpakangas (FI); OY ALKO AB, 00101 Helsinki (FI)
(72) Inventor: Orre,Kyösti, SF-05200 Rajamäki (FI)
(74) Representative: Neidl-Stippler, Cornelia, Dr.

(56) References cited:
- EP-A- 0 147 464
- AU-B- 464 542
- DE-A- 2 817 454
- FR-A- 2 365 302
- FR-A- 2 490 928
- GB-A- 2 107 168
- US-A- 3 908 031
- US-A- 3 914 445

## Description

The invention relates to a process for deep-freezing foodstuff, particularly for deep-freezing unprotected and/or cover protected foodstuff, by bringing the foodstuff to be frozen in contact with a refrigerated deep-freezing solution.

In the present day industrial deep-freezing of foodstuffs, air, contact or cryogenic deep-freezing are applied.

In air deep-freezing, the deep-freezing takes place in stationary or flowing air. Among the drawbacks of this procedure may be mentioned the drying losses of the material that is being deep-frozen and those losses which are due to the fact that material sticks e.g. to the shelf or conveyor belt surfaces. Furthermore, as a rule the energy expenditure is high, with the consequence that in order to avoid unnecessary extra costs the deep-freezing volumes should be tightly sealed.

In contact deep-freezing, heat transfer is by conduction. In this case the materials, or packages, which are being deep-froozen should have regular shape, and this restricts the applications of the procedure.

In cryogenic deep-freeing, the deep-freezing is carried out using a liquified gas into which the material to be deep-froozen is immersed; or the liquified gas is sprayed on the material. Gases wich are being used in this way include nitrogen, freon (CCl₂F₂, b.p. -29,8°C) and carbon dioxid gas which use for freezing foodstuff is described e.g. by DE-OS-2 817 454.

On the surface of the material to be deep-frozen and which has been immersed in liquid nitrogen, gas bubbles form at the escape of which temperature differences arise. These differential temperatures cause stresses in the material, which disrupt its tissues. Therefore, liquid nitrogen is usually sprayed on the material to be deep-frozen. Among the draw-backs of this procedure are noted its high operating costs, which are caused by the nitrogen-liquifying apparatus or by the required liquid nitrogen tanks; drying losses which the material suffers; and a labour safety risk arising from the gasifying nitrogen.

Deep-freezing with carbon dioxide likewise requires tightly sealed deep-freezing volumes because the gasifying carbon dioxide introduces a labour safety risk.

The use of freon gas is additionally restricted by the freon residues which are left on the surface of the deep-frozen material. In this case the foodstuffs have to be carefully protected. The use of a protecting cover in this turn impairs the heat transfer.

Furthermore, a variety of preservative substances is known to improve the keep-quality of foodstuff in the deep-freezing process as shown by GB-A-2 107 168, FR-A-2 365 302, US-A-3 914 445 and EP-A-0 147 464. FR-A-2490928 discloses a bactericide solution based on ethanol and an organic salt. US-A-3 908 031 and AU-B-464 542 disclose the use of ethanol vapour and/or halogenated hydrocarbons for the sterilization of foodstuff at higher temperatures. However, said solutions and vapour mixtures are not used for deep-freezing foodstuff.

The object of the present invention is to eliminate the drawbacks mentioned in the foregoing. The particular object of the invention is to provide a novel deep-freezing process with a solution which is not gasifying in use and with the aid of which various materials, in particular foodstuffs, can be deep-frozen without protective covering.

The process according to the invention shall have the advantage that the deep-freezing solution has the effect of improving the keeping quality of the material to be deep-frozen and, in particular, that the deep-froozen material retains its original colour.

It is a further object of the invention to provide a novel deep-freezing procedure in which the material to be deep-frozen is brought in contact with a deep-freezing solution as taught by the invention, for achieving rapid deep-freezing and a high-quality deep-frozen product.

This object is achieved by a deep-freezing process as described in claim 1. Preferred embodiments of the process according to the invention are disclosed by the appendent claims.

The deep-freezing solution according to the invention contains 35 to 100 % by weight ethanol, advantageously 45 to 80% by weight ethanol, more particular 65 % by weight ethanol and 0 to 65 % by weight water, calculated on the completed solution. Foodstuffs can be deep-frozen without cover, or protected with a cover, by contacting them with the refrigerated deep-freezing solution.

The deep-freezing solution of the invention is particularly appropriate for use in deep-freezing unprotected foodstuffs. The solution does not harm the foodstuffs, and foodstuffs treated with the solution meet the provisions enacted for foodstuffs. The ethanol contained in the solution has an effect killing pathogenic bacteria, and it prevents oxidation of the surface of the foodstuff that is being deep-frozen, whereby treatment of a foodstuff without covering with the deep-freezing solution improves the keeping quality of the foodstuff.

The temperature of the solution can be brought very far down by refrigeration, e.g. below about -20^{o}C, advantageously about -40 to -60^{o}C, and the heat transfer is excellent.

In an advantageous embodiment, the deep-freezing solution contains preservative and/or other additives especially allowed for foodstuffs, which improve for instance the keeping quality of the foodstuffs, their colour retention, the preservation of their surface quality and/or the preservation of their flavour. For such agents may be used, for instance, ascorbic acid 0 to 0.2% by weight, ascorbate 0 to 0.2% by weight, citric acid 0 to 0.2% by weight, glycerol 1 to 2% by weight and/or glycine 1 to 3% by weight, calculated on the weight of the completed solution. Instead of ascorbic acid and citric acid, salts of these acids may be used, for instance their sodium salts. The discolouration, e.g. yellowish or reddish, which may possibly appear when citric and/or ascorbic acid and/or the corresponding salts are present in the deep-freezing solution can be eliminated by using, instead of said substances, sorbic acid or its K, Na or Ca salts, for instance 0 to 0.2% by weight.

Furthermore, the discolouration of the solution caused by heavy metals, e.g. by Fe, can be eliminated by simultaneous use of acetic acid salts.

Other preservative and/or additive substances may equally be used.

The deep-freezing solution of the invention can be used to carry out the actual deep-freezing of various materials, such as foodstuffs; to predeep-freeze them, in which case the products predeep-frozen in this way are subjected to actual deep-freezing by another procedure; or to give the material a surface treatment, for instance in order to improve the keeping quality of the material.

In the deep-freezing procedure of the invention the material, for instance a foodstuff, without cover or protected with a cover, is deep-frozen by contacting it with a refrigerated deep-freezing solution as taught by the invention. The material to be deep-frozen is, for instance, submerged in the deep-freezing solution in order to accomplish deep-freezing. Subsequent to the deep-freezing process, the deep-frozen product is possibly rinsed, e.g. with water, prior to further treatment.

In the procedure of the invention the deep-freezing solution may be refrigerated to a temperature e.g. below -20^{o}C, advantageously -40 to -60^{o}C, appropriately about -50^{o}C. Hereby the deep-freezing time for the product can be made substantially shorter than e.g. in air deep-freezing, because heat transfer is better (and consequently the deep-freezing is faster) in a liquid than in air.

The deep-freezing treatment is advantageously given to material having no cover, whereby the properties of the deep-freezing solution aiding the keeping quality can be utili zed and efficient heat transfer can be achieved between the material that is being deep-frozen and the deep-freezing solution.

In an advantageous embodiment, the deep-freezing is carried out by spraying. In that case the refrigerated deep-freezing solution of the invention is sprayed on the material to be deep-frozen.

In the deep-freezing procedure of the invention, drying losses and material losses of the deep-frozen material are avoided. In addition, the procedure keeps the colour and flavour of the product, and possibly those nutrients which it contains, substantially unchanged. The structure of the deep-frozen material is also well retained after thawing, for the reason that owing, to the fast deep-freezing achieved with the procedure disruption of the cells and tissues in the material that is being deep-frozen is avoided.

Furthermore, lower operating costs are achieved by the deep-freezing procedure of the invention, compared with the state of art, for the reason that the shorter deep-freezing time and the simple refrigerating apparatus for which the procedure calls reduce the energy consumption.

The invention is illustrated in the following with the aid of embodiment examples.

### Example 1

In Table 1 is presented the composition of a deep-freezing solution according to the invention.

**TABLE I**

| | |
|---|---|
| "A" spirit (100%) | 650 g |
| Water | 344 g |
| Sodium salt of 1-ascorbic acid | 0.5 g |
| Sodium salt of citric acid | 0.5 g |
| Glycine | 3 g |
| Glycerol | 2 g |
| Total | 1000 g |

The deep-freezing solution of Table I has 65% concentration regarding ethanol. The solution contains constituents allowed for foodstuffs and may therefore be used, in refrigerated condition, to deep-freeze e.g. various foodstuffs, such as fish, seafood, meat, poultry, vegetables and processed food.

### Example 2

In a deep-freezing procedure according to the invention, based on immersion of the material to be deep-frozen, the deep-freezing solution is refrigerated in a refrigeration basin fitted with a refrigerating apparatus known in itself in the art, to a suitable temperature, e.g. -50^{o}C. Submersion of the material to be deep-frozen is accomplished manually, or e.g. with the aid of a conveyor, such as a belt conveyor. When for instance a belt conveyor mounted in the basin is employed, the material to be deep-frozen is conveyed with the aid of the conveyor at the initial end, for instance protected with a cover, of the refrigerating basin down under the free surface of the solution, and where deep-freezing of the material takes place. After a period of time such as is desired, the deep-frozen material is removed from the deep-freezing solution, along with the belt conveyor, at the other end from the refrigerating basin. The deep-frozen material on the conveyor is thereafter possibly rinsed e.g. with the aid of a water jet, whereafter the product is packaged and shipped onward. If the procedure is applied to accomplish predeep-freezing, the predeep-frozen products may after this treatment be transported to the deep-freezing unit proper.

The deep-freezing time can be regulated e.g. with the aid of the conveyor's speed. The products which are being deep-frozen should be as nearly uniform in size as possible with a view to uniform degree of deep-freezing.

The deep-freezing solution is kept clean by removing any matter detached from the deep-freezing material that may accumulate on the free surface of the solution. Moreover, the need to change solution may be monitored e.g. by measuring the ethanol content.

The shape of the products which can be deep-frozen by the procedure is not subject to any limitations.

The embodiment examples are merely meant to illustrate the invention, without confining it in any way whatsoever.

## Claims

1. A process for deep-freezing foodstuff, particularly for deep-freezing unprotected and/or cover protected foodstuff, by bringing the foodstuff to be frozen in contact with a refrigerated deep-freezing solution, characterized in that said deep-freezing solution contains 35 to 100 % by weight ethanol, particularly 45 to 80 % by weight ethanol, more particularly 65 % by weight ethanol, and 0 to 65 % by weight water, based on the completed solution.

2. Process according to claim 1 wherein said deep-freezing solution further comprises preservative and/or additive substances for improving the keeping quality of the foodstuff and/or the preservation of colour, surface quality and flavour.

3. Process according to claim 2 wherein said deep-freezing solution comprises 0 to 0.2 % by weight ascorbic acid and/or ascorbate, 0 to 0.2 % by weight citric acid and/or citrate, 0 to 2 % by weight sorbic acid and/or sorbate, acetic acid and/or salts of acetic acid.

4. Process according to any preceeding claim 1 to 3, wherein said deep-freezing solution comprises 1 to 2 % by weight glycerol and/or 1 to 3 % by weight glycine.

5. Process according to any preceeding claim 1 to 3 wherein said deep-freezing solution consists of 65 % by weight ethanol, 34,4 % by weight water, 0.05 % by weight the sodium salt of L-ascorbic acid, 0.05 % by weight the sodium salt of citric acid, 0.3 % by weight glycine and 0.2 % by weight glycerol.

## Patentansprüche

1. Verfahren zum Tieffrieren von Nahrungsmitteln, insbesondere zum Tieffrieren von ungeschützten und/oder mit einem Überzug geschützten Nahrungsmitteln, wobei das tiefzufrierende Nahrungsmittel mit einer gekühlten Tieffrier-Lösung in Berührung gebracht wird, dadurch gekennzeichnet, daß die Tieffrier-Lösung 35 bis 100 Gew.% Ethanol, bevorzugt 45 bis 80 Gew.% Ethanol und besonders bevorzugt 65 Gew.% Ethanol, und 0 bis 65 Gew.% Wasser, auf Basis der Gesamtlösung, enthält.

2. Verfahren nach Anspruch 1, wobei die Tieffrier-Lösung ferner Konservierungsmittel und/oder Additive zur Verbesserung der Haltbarkeit des Nahrungsmittels und/oder Konservierung von Farbe, Oberflächenqualität und Geschmack aufweist.

3. Verfahren nach Anspruch 2, wobei die Tieffrier-Lösung 0 bis 0,2 Gew.% Ascorbinsäure und/oder Ascorbat, 0 bis 0,2 Gew.% Citronensäure und/oder Citrat; 0 bis 2 Gew.% Sorbinsäure und/oder Sorbat, Essigsäure und/oder Salze der Essigsäure aufweist.

4. Verfahren nach irgendeinem der vorangehenden Ansprüche 1 bis 3, wobei die Tieffrier-Lösung 1 bis bis 2 Gew.% Glycerin und/oder 1 bis 3 Gew.% Glycin aufweist.

5. Verfahren nach irgendeinem der vorangehenden Ansprüche 1 bis 3, wobei die Tieffrier-Lösung aus 65 Gew.% Ethanol, 34,4 Gew.% Wasser, 0,05 Gew.% Natriumsalz der L-Ascorbinsäure, 0,05 Gew.% Natriumsalz der Citronensäure, 0,3 Gew.% Glycin und 0,2 Gew.% Glycerin besteht.

## Revendications

1. Procédé pour la surgélation d'aliments, en particulier la surgélation d'aliments non protégés et/ou protégés par une couverture, en amenant les aliments devant être surgelés en contact avec une solution de surgélation réfrigérée, caractérisé en ce que ladite solution de surgélation contient de 35 à 100% en poids d'éthanol, en particulier de 45 à 80% en poids d'éthanol, et plus particulièrement 65% en poids d'éthanol et 0 à 65% en poids d'eau, exprimés par rapport à la solution complète.

2. Procédé selon la revendication 1 dans lequel la solution de surgélation comprend en plus des substances de conservation et/ou d'addition, pour améliorer la qualité de conservation des aliments et/ou la préservation de la couleur, de la qualité de surface et de la saveur.

3. Procédé selon la revendication 2 dans lequel la solution de surgélation comprend de 0 à 0,2% en poids d'acide ascorbique et/ou d'ascorbate, de 0 à 0,2% en poids d'acide citrique et/ou de citrate, de 0 à 2% en poids d'acide sorbique et/ou de sorbate, acide acétique et/ou sels d'acide acétique.

4. Procédé selon l'une quelconque des revendications précédentes 1 à 3 dans lequel la solution de congélation comporte de 1 à 2% en poids de glycérol et/ou de 1 à 3% en poids de glycine.

5. Procédé selon l'une quelconque des revendications précédentes 1 à 3 dans lequel la solution de congélation est constituée de 65% en poids d'éthanol, 34,4% en poids d'eau, 0,05% en poids du sel sodique de l'acide L-ascorbique, de 0,05% en poids du sel sodique de l'acide citrique, de 0,3% en poids de glycine et de 0,2% en poids de glycérol.
